# EUROPÄISCHE PATENTSCHRIFT

(11) **EP 1 930 191 B1**
(45) Veröffentlichungstag und Bekanntmachung des Hinweises auf die Patenterteilung: **02.12.2009**
(21) Anmeldenummer: 06025338.2
(22) Anmeldetag: 07.12.2006
(51) Int. Cl.: B60H 1/00

(54) **Fahrzeugheizungs- und/oder Klimaanlage mit kombinierter Luftmisch- und -verteilerklappe**
Vehicle heating and/or air conditioning device with combined air mixing and distributing damper door
Dispositif de chauffage et/ou de climatisation d'un véhicule avec un volet de mixage et de distribution d'air

(43) Veröffentlichungstag der Anmeldung: 11.06.2008
(73) Patentinhaber: Behr GmbH & Co. KG, 70469 Stuttgart (DE); Behr America, Inc, Troy, Michigan 48083 (US); Behr France Rouffach SAS, 68250 Rouffach (FR)
(72) Erfinder: Berger, Michael, 71642 Ludwigsburg (DE); Lindner, Björn, Troy MI 48085 (US); Royer, Olivier, 68040 Ingersheim (FR); Satrapa, Alexander, 71069 Sindelfingen (DE); Schall, Matthias, 73760 Ostfildern-Ruit (DE); Wolf, Walter, 71570 Oppenweiler-Zell (DE)
(74) Vertreter: Grauel, Andreas

(56) Entgegenhaltungen:
- EP-A- 1 477 347
- EP-A1- 1 306 241
- DE-C1- 19 837 338
- GB-A- 2 168 786
- GB-A- 2 333 355
- US-A- 5 062 352

## Beschreibung

Die Erfindung betrifft eine Fahrzeugheizungs- und/oder Klimaanlage mit kombinierter Luftmisch- und -verteilerklappe gemäß dem Oberbegriff des Anspruchs 1, und wie offenbart in US 5062352.

Aus der EP 1 306 241 A1 ist eine Fahrzeugheizungs- und Klimaanlage mit kombinierter Luftmisch- und -verteilerklappe bekannt, welche einen zuführenden Luftkanal, der Luft zu einem Heizer führt, und ein Bypass zum Heizer vorgesehen ist, und drei getrennt ausgebildete, weiterführende Luftkanäle aufweist. Hierbei ist eine kombinierte Luftmisch- und - verteilerklappe für die Regelung des Luftstroms durch den Heizer bzw. durch den Bypass hierzu sowie die Regelung der Luftverteilung der temperierten Luft auf zwei der drei Luftkanäle zum Fahrzeuginnenraum vorgesehen. Die Klappe ist als Trommelklappe ausgebildet, wobei sie zwei einander gegenüberliegende innere Klappenflächen aufweist, welche im Bereich der Zylinderfläche der Trommelklappe angeordnet sind. Die beiden von der Trommelklappe geregelten Luftkanäle zum Fahrzeuginnenraum sind direkt benachbart zueinander angeordnet. Der dritte Luftkanal wird mit einer herkömmlichen Doppelflügelklappe geregelt. Die Austrittsöffnung des dritten Luftkanals, bei dem es sich um den Fußraum-Luftkanal handelt, ist im Wesentlichen gegenüberliegend den Austrittsöffnungen der beiden anderen Luftkanäle angeordnet.

Aus der GB 2 168 786 A ist eine weitere Luftmisch- und -verteilerklappe bekannt, welche die Luftverteilung von zwei zuleitenden Luftkanälen, nämlich einem Warm- und einem Kaftluftkanal, auf drei zum Fahrzeuginnenraum führenden Kanälen, nämlich den Kanälen zur Fußraumbelüftung, zur Front- und Seitendüse (Belüftung) und zum Defrostbetrieb, verteilt wird. Diese Klappe lässt noch Wünsche offen.

Es ist Aufgabe der Erfindung, eine verbesserte Fahrzeugheizungs- und/oder Klimaanlage mit kombinierter Luftmisch- und -verteilerklappe zur Verfügung zu stellen.

Diese Aufgabe wird gelöst durch eine Fahrzeugheizungs- und/oder Klimaanlage mit kombinierter Luftmisch- und -verteilerklappe mit den Merkmalen des Anspruchs 1. Vorteilhafte Ausgestaltungen sind Gegenstand der Unteransprüche.

Erfindungsgemäß ist eine Heizungs- und/oder Klimaanlage, insbesondere für ein Kraftfahrzeug, vorgesehen, die von dem Fahrzeuginnenraum zuzuführender Luft zur Temperierung derselben durchströmbar ist, mit einer kombinierten Luftmisch- und Verteilerklappe, die zumindest teilweise zylinderförmig ausgebildet ist, um eine Drehachse verdrehbar ist, und zur Regelung der Lufttemperatur und der Luftverteilung der dem Fahrzeuginnenraum zuzuführenden Luft dient, bei der zwei zuführende Luftkanäle, wobei es sich bevorzugt um einen Warmluftkanal und einen Kaltluftkanal handelt, und drei weiterführende Luftkanäle, wobei es sich vorzugsweise um einen Belüftungskanal, einen Fußraumkanal und einen Defrostkanal handelt, vorgesehen sind. Hierbei weist die kombinierte Luftmisch- und Verteilerklappe Flächen auf, welche derart ausgebildet sind, dass sie in einer Stellung, in welcher der eine zuführende Luftkanal vollständig geöffnet ist, den jeweils anderen zuführenden Luftkanal vollständig verschließt. Dies stellt sicher, dass keine Luft durch den im entsprechenden Betriebszustand nicht benötigten zuführenden Luftkanal strömt, so dass die gewünschte Temperatur nicht verfälscht wird. Dadurch, dass nur eine Klappe vorgesehen ist, vereinfacht sich die Regelung in Folge der deutlich verringerten Anzahl von Aktuatoren. Die Betätigung kann automatisch oder von Hand erfolgen. Durch die Vereinfachung wird auch die Einstellbarkeit von Hand vereinfacht, so dass beispielsweise der Fahrer bei einer Bedienung der Heizungs- und/oder Klimaanlage nicht so stark während des Fahrens abgelenkt wird.

Bei der Klappe handelt es sich bevorzugt um eine Art Trommelklappe. Der Durchmesser der Klappe ist vorzugsweise größer als 100 mm und liegt bevorzugt im Bereich von 120 bis 150 mm. Die Länge der Klappe beträgt bevorzugt ca. 200 mm.

Bei der Anlage handelt es sich bevorzugt um eine Heizungs- und Klimaanlage mit einem Verdampfer, der von dem gesamten Luftstrom durchströmt wird, und einem Heizer (und ggf. Zuheizer), der bedarfsgeregelt von Luft durchströmt wird, so dass sich zwei zuführende Luftkanäle ergeben, nämlich ein direkt vom Verdampfer kommender Kaltluftkanal und ein vom Heizer kommender Warmluftkanal. Alternativ kann es sich bei der Anlage um eine reine Heizungsanlage handeln, die einen Luftkanal aufweist, der die Luft durch den Heizer leitet, und einen anderen Luftkanal aufweist, der die Luft vorbei am Heizer leitet, so dass beim zweiten Luftkanal keine Temperierung der Luft erfolgt. Auch in diesem Fall ist somit ein Warmluftkanal und ein Kaltluftkanal vorhanden, in welchem nicht zusätzlich erwärmte Luft strömt. Entsprechend kann es sich um ein reines Klimagerät handeln, bei dem ein Luftkanal Luft durch den Verdampfer leitet und ein zweiter Luftkanal die Luft vorbei am Verdampfer leitet.

Die Luftmisch- und Verteilerklappe ist bevorzugt derart ausgebildet, dass jede der Öffnungen der zuführenden und weiterführenden Luftkanäle in mindestens einer Klappenstellung vollständig verschlossen ist.

Ebenfalls ist die Luftmisch- und Verteilerklappe bevorzugt derart ausgebildet, dass jede der Öffnungen der zuführenden und weiterführenden Luftkanäle in mindestens einer Klappenstellung vollständig geöffnet ist.

Die schließenden Flächen der Luftmisch- und Verteilerklappe, welche die nicht benötigten, zuführenden Luftkanäle verschließen, werden bevorzugt durch zylinderförmige Bereiche gebildet.

Die Flächen werden vorzugsweise durch Bereiche der Mantelfläche der kombinierten Luftmisch- und Verteilerklappe gebildet. Diese Mantelfläche ist bevorzugt zylinderförmig ausgebildet. Das Vorsehen von Dichtlippen oder anderen abdichtenden Elementen an den Enden der verschließenden Flächen ist möglich, um ein Umströmen von Luft zu verhindem,

Bevorzugt ist als weiterführende Luftkanäle ein Defrostkanal benachbart, insbesondere ohne einen wesentlichen Abstand, neben einem Fußkanal vorgesehen. Unter ohne wesentlichen Abstand wird hierbei im Folgenden ein Abstand von maximal etwas mehr als der doppelten Wandstärke verstanden.

Enfindungsgemäß ist ein Fußkanal zwischen einem Belüftungskanal und einem Defrostkanal angeordnet. Insbesondere bevorzugt sind die drei Luftkanäle ohne wesentliche Abstände voneinander ausgebildet. Besonders bevorzugt ist keine gleichzeitige Luftzufuhr über den Belüftungskanal und den Defrostkanal möglich.

Dadurch, dass ein Defrostkanal gegenüberliegend einem Warmluftkanal angeordnet ist, insbesondere bevorzugt möglichst exakt diagonal gegenüberliegend, kann sichergestellt werden, dass im Defrostbetrieb möglichst viel, insbesondere bevorzugt ausschließlich, warme Luft vom Warmluftkanal der Windschutzscheibe zugeführt wird, so dass ein schnelles Enteisen oder Entfernen eines Beschlags möglich ist.

Die Reihenfolge der Luftkanäle um die Klappe herum ist vorzugsweise Folgende: Kaltluftkanal, Warmluftkanal, Belüfftungskanal, Fußraumkanal und Defrostkanal.

Für den Komfort der Insassen ist es vorteilhaft, wenn ein Belüftungskanal gegenüberliegend einem Kaltluftkanal angeordnet ist. Dies ermöglicht, dass beispielsweise bei einem reinen Belisftungsbetrieb kühlere Luft als bei einem Mischbetrieb Belüftung - Fußraumbelüftung dem Fahrzeuginnenraum zugeführt wird.

Gemäß einer bevorzugten Ausführungsform ist der Öffnungswinkel für alle drei weiterführenden Luftkanäle jeweils gleich groß. Dies ermöglicht eine vereinfachte Ausgestaltung der Klappe, wobei bevorzugt die Luftaustrittsöffnung der Klappe der Öffnung der weiterführenden Luftkanäle entspricht.

Der Öffnungswinkel aller drei weiterführenden Luftkanäle liegt vorzugsweise in einem Bereich von jeweils 30 bis 60°, insbesondere bevorzugt bei ca. 36°.

Der Öffnungswinkel der zuführenden Luftkanäle liegt vorzugsweise in einem Bereich von jeweils 30 bis 60°, insbesondere bevorzugt bei ca. 36°.

Besonders bevorzugt ist eine Eintrittstrennung der beiden zuführenden Luftkanäle von 0 bis 45°, insbesondere von 18 bis 36°, vorgesehen. Dies ermöglicht sowohl Zwischenstellungen, bei denen sowohl Kalt- als auch Warmluft weitergeführt wird, als auch Stellungen, bei denen ausschließlich Kalt- oder Warmluft weitergeführt wird. Durch den vergrößerten Zwischenbereich kann ein unerwünschtes Überströmen von Kalt- oder Warmluft im Falle einer Stellung, bei der ausschließlich Warm- bzw. Kaltluft gewünscht wird, einfach verhindert werden.

Eine Asymmetrie der Mittelebene beider zuführender Luftkanäle bezüglich der Mittelebene des mittleren der weiterführenden Luftkanäle von 0 bis 30°, insbesondere von 9 bis 18°, ist vorgesehen. Diese Asymmetrie ermöglicht eine gezieltere Koppelung einzelner Luftkanäle, bspw. des Kaltluftkanals mit dem Belüftungskanal und des Warmluftkanals mit dem Defrostkanal.

Die Luftmisch- und Verteilerklappe weist vorzugsweise zwei innere Klappenflächen auf, die einander gegenüberliegend angeordnet sind und einen Luftkanal bilden, wobei die Klappenflächen in Luftströmungsrichtung gesehen aufeinander zulaufen. Der Öffnungswinkel der Klappenflächen beträgt vorzugsweise 5 bis 30°, insbesondere bevorzugt 10 bis 25°.

Insbesondere bevorzugt ist die Eintrittsöffnung, die durch die Klappenflächen gebildet wird, größer als die Austrittsöffnung der zuführenden Luftkanäle.

Bevorzugt entspricht die Austrittsöffnung, die durch die Klappenflächen gebildet wird, den Eintrittsöffnungen der weiterführenden Luftkanälen, so dass zumindest in den Stellungen, bei denen die gesamte Luft einem weiterführenden Luftkanal zugeführt wird, am Luftaustritt aus der Klappe keine Verwirbelungen entstehen.

Besonders bevorzugt ist mindestens eine Stellung der Luftmisch- und Verteilerklappe vorgesehen, in welcher die zuführenden Luftkanäle von den weiterführenden Luftkanälen durch mindestens eine durchgehende Klappenfläche der Luftmisch- und Verteilerklappe getrennt sind, d.h. die Öffnungen der zuführenden Luftkanäle sind vollständig von den Öffnungen der weiterführenden Luftkanäle getrennt, so dass die Klappe vollständig geschlossen sein kann.

In der kombinierten Luftmisch- und Verteilerklappe sind vorzugsweise Leltteile und/oder Kanalstrukturen ausgebildet. Diese Leitteile bzw. Strukturen können dazu dienen, die Warm- und Kaltluft besser zu vermischen. Ferner können sie den Luftstrom gezielt in eine bestimmte Richtung lenken.

Im Folgenden wird die Erfindung anhand zweier Ausführungsbeispiele unter Bezugnahme auf die Zeichnung im Einzelnen erläutert. Es zeigen:
- Fig. 1: eine vereinfachte, ausschnittsweise geschnittene Darstellung einer Kraftfahrzeug-Heizungs- und Klimaanlage gemäß dem ersten Ausführungsbeispiel im Bereich der kombinierten Luftmisch- und - verteilerklappe in einer Stellung 100% Belüftung,
- Fig. 2: eine Darstellung der Luftmisch- und -verteilerklappe von Fig. 1 in einer Stellung 50% Belüftung und 50% Fußraumbelüftung,

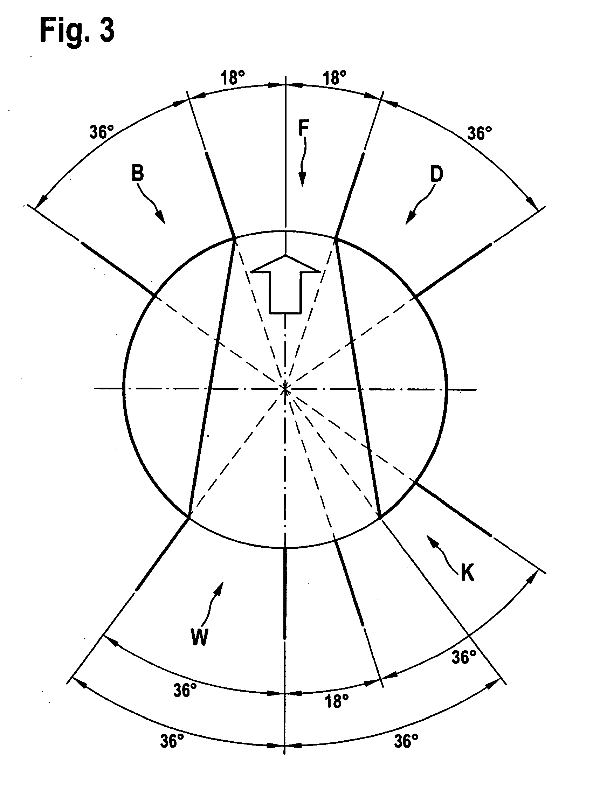

- Fig 3: eine Darstellung der Luftmisch- und -verteilerklappe von Fig. 1 in einer Stellung 100% Fußraumbelüftung,

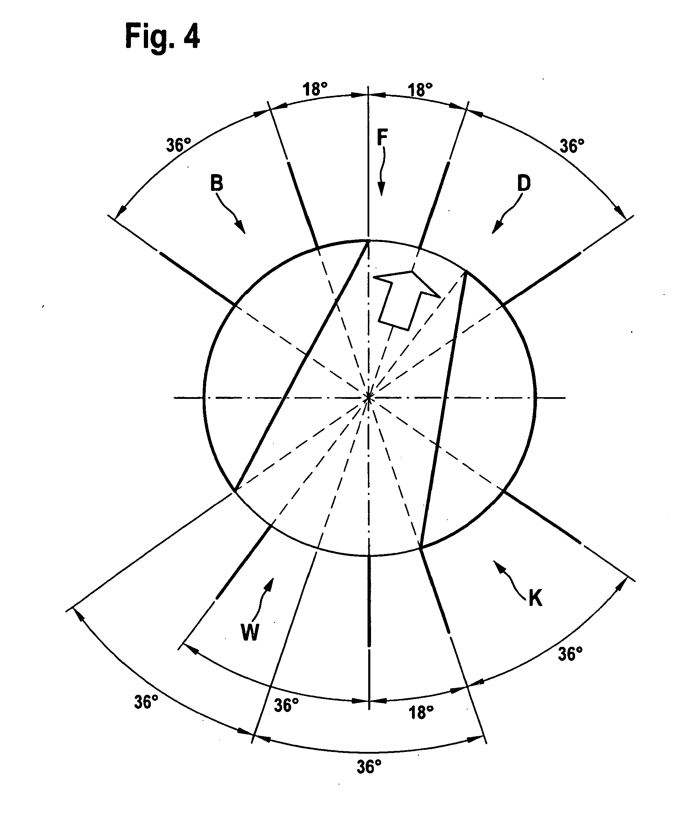

- Fig. 4: eine Darstellung der Luftmisch- und -verteilerklappe von Fig. 1 in einer Stellung 50% Fußraumbelüftung und 50% Defrostbetrieb,

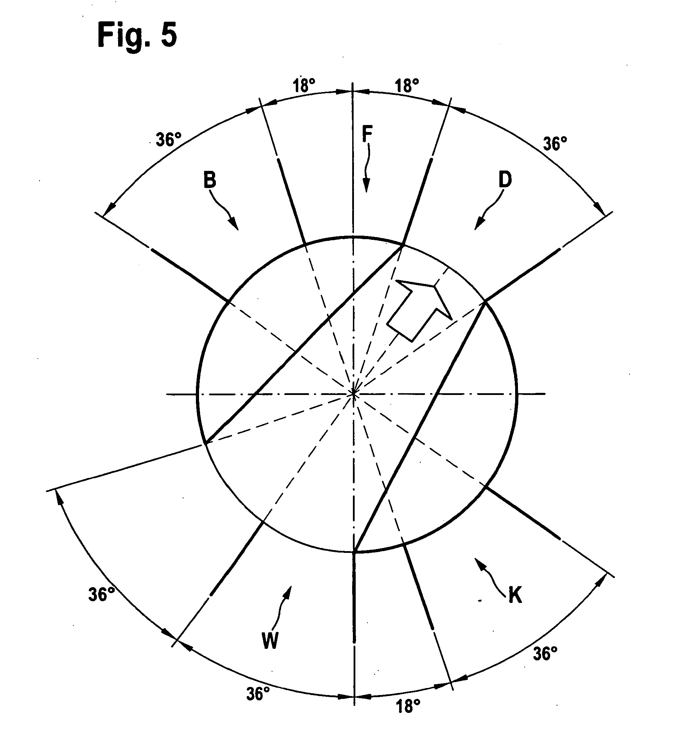

- Fig. 5: eine Darstellung der Luftmisch- und -verteilerklappe von Fig. 1 in einer Stellung 100% Defrostbetrieb,

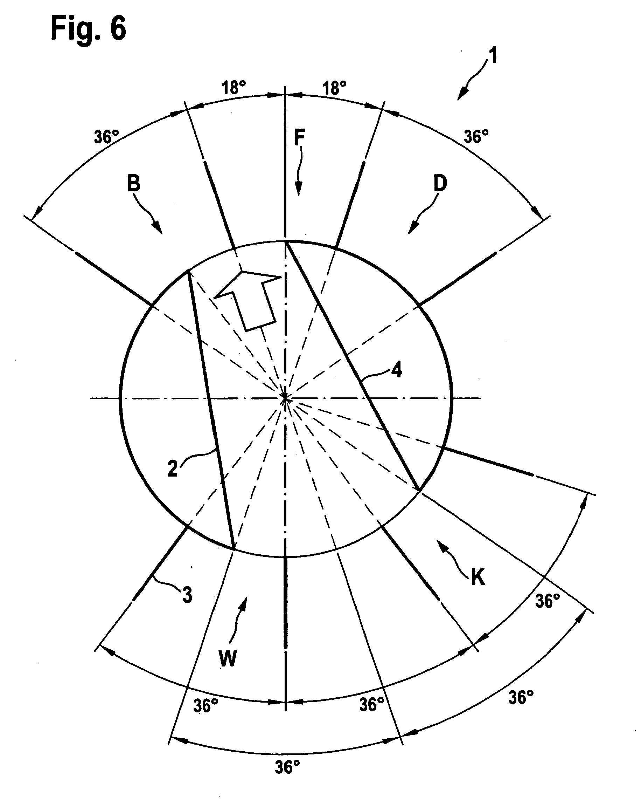

- Fig. 6: eine stark vereinfachte, ausschnittsweise geschnittene Darstellung einer Kraftfahrzeug-Heizungs- und Klimaanlage gemäß dem zweiten Ausführungsbeispiel im Bereich der kombinierten Luftmisch- und - verteilerklappe in einer Stellung 50% Belüftung und 50% Fußraumbelüftung,
- Fig. 7: eine Darstellung der Luftmisch- und -verteilerklappe von Fig. 6 in einer Stellung 100% Fußraumbelüftung,
- Fig. 8a-g: verschiedene Beispiele für Leitteile und Verdrängungskörper, die in einer erfindungsgemäßen Klappe angeordnet sein können,
- Fig. 9: einen Schnitt durch eine Kraftfahrzeug-Heizungs- und Klimaanlage in der Betriebsstellung "Belüftung 100% kalt",
- Fig. 10: einen Schnitt durch die Anlage von Fig. 9 in einer Betriebsstellung "Belüftung temperiert",
- Fig. 11: einen Schnitt durch die Anlage von Fig. 9 in einer Betriebsstellung "Fußraum temperiert",
- Fig. 12: einen Schnitt durch die Anlage von Fig. 9 in einer Betriebsstellung "Fußraum 100% warm", und
- Fig. 13: einen Schnitt durch die Anlage von Fig. 9 in einer Betriebsstellung "Defrost 100% warm".

Eine Kraftfahrzeug-Heizungs- und Klimaanlage 1 weist ein Gebläse, einen Verdampfer, einen Heizer und eine kombinierte Luftmisch- und - verteilerklappe 2 auf, die in einem in der Zeichnung stark vereinfacht ausschnittsweise dargestellten, mehrteilig ausgebildeten Luftführungsgehäuse 3 angeordnet ist. Im Luftführungsgehäuse 3 sind fünf Luftkanäle ausgebildet, nämlich für die Zuführung der warmen, vom Heizer kommenden Luft (Warmluftkanal W), für die Zuführung der kalten, direkt vom Verdampfer über einen Bypass vorbei am Heizer geleiteten Luft (Kaltluftkanal K), für die Weiterleitung der gemischten, temperierten Luft zur Belüftung des Innenraums (Belüftungskanal B), für die Weiterleitung der gemischten, temperierten Luft zum Fußraum (Fußraumkanal F) und für die Weiterleitung der warmen Luft zum Entfrosten der Windschutzscheibe (Defrostkanal D). Im Folgenden wird auf den Warmluft- und den Kaltluftkanal auch als zuführende Luftkanäle und auf die drei anderen Luftkanäle auch als weiterführende Luftkanäle Bezug genommen.

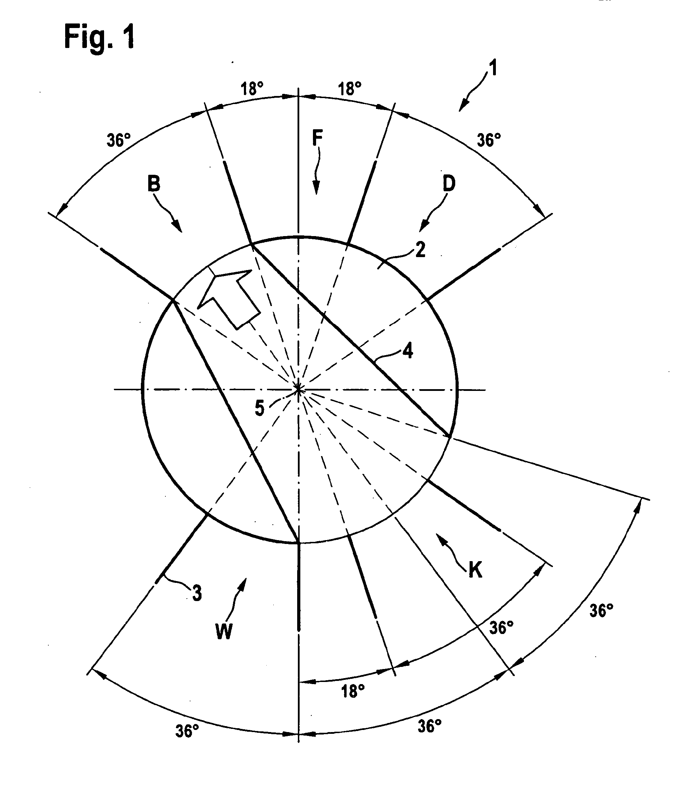

Gemäß dem ersten Ausführungsbeispiel sind die Öffnungen aller Luftkanäle im Bereich der Luftmisch- und -verteilerklappe 2 jeweils in einem 36°-Winkel ausgebildet. Die Öffnungen des Warmluftkanals W und des Kaltluftkanals K sind voneinander 18° beabstandet, d.h. die Eintrittstrennung beträgt vorliegend 18° Wie aus Fig. 1 ersichtlich, ist die Mitte des Fußraumkanals F diagonal gegenüberliegend der kaltluftkanalseitigen Seitenwand des Warmluftkanals W angeordnet. Die Öffnungen der drei Luftkanäle B, F und D sind in direkter Nachbarschaft voneinander angeordnet, wobei der Fußraumkanal F mittig zwischen den anderen Luftkanälen B und D angeordnet ist. Wird jeweils die Mittelachse der Gruppen der zuführenden Luftkanäle und der weiterführenden Luftkanäle genommen, so sind diese Mittelachsen in einem Winkel von 9° zueinander versetzt angeordnet. Auf diesen Versatz wird auch als Asymmetrie Bezug genommen.

Die Klappe 2 weist äußere Klappenflächen, welche die Gestalt von Teilbereichen eines Zylinders aufweisen, und zwei vorliegend zumindest auf der Luftströmungsseite vollständig eben ausgebildete, innere Klappenflächen 4 auf, die in Luftstfömungsrichtung aufeinander zulaufend angeordnet sind. Der Öffnungswinkel der inneren Klappenflächen 4 beträgt vorliegend 20°. Die Drehachse 5 der Klappe 2 ist zentral zwischen den inneren Klappenflächen 4 angeordnet.

Fig. 1 zeigt die Stellung der Klappe 2 "100% Belüftung", wobei ausschließlich Kaltluft vom Kaltluftkanal K dem Belüftungskanal B zugeführt wird. Die anderen Kanäle W, F und D sind durch die zylindrische Außenfläche der Klappe 2 abgesperrt.

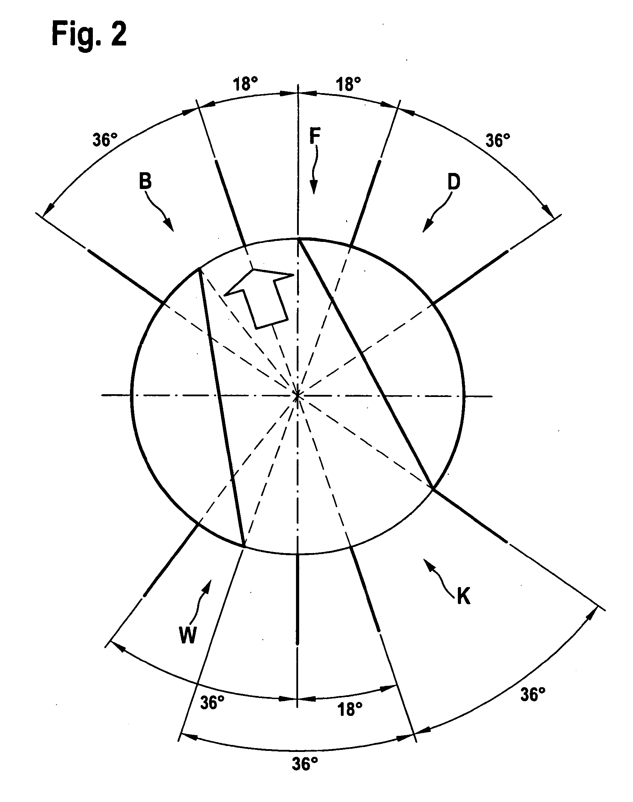

Fig. 2 zeigt die Klappe 2 in einer Stellung "50% Belüftung und 50% Fußraumbelüftung". Hierbei ist 100% der Öffnung des Kaltluftkanals K und ca 50% der Öffnung des Warmluftkanals W von der Klappe 2 freigegeben, so dass sich automatisch eine Mischtemperatur ergibt.

Im Falle der Stellung "100% Fußraumbelüftung" ist die Öffnung des Warmluftkanals W vollständig frei, während die Öffnung des Kaltluftkanals K zu 50% verdeckt ist, so dass sich wiederum eine Mischtemperatur ergibt, die jedoch über der vorstehend genannten Mischtemperatur in der Stellung "50% Belüftung und 50% Fußraumbeiüftung" liegt.

In einer Stellung "50% Fußraumbelüftung und 50% Defrostbetrieb" wird ausschließlich Warmluft dem Fußraumkanal F und dem Defrostkanal D zugeführt. Der Kaltluftkanal K ist vollständig abgesperrt. Entsprechendes gilt auch für die Stellung "100% Defrostbetrieb", so dass ausschließlich Warmluft zum Entfrosten der Windschutzscheibe verwendet wird.

Der Aufbau der Kraftfahrzeug-Heizungs- und Klimaanlage 1 samt Luftmisch- und -verteilerklappe 2 gemäß dem zweiten Ausführungsbeispiel entspricht - abgesehen von der Anordnung des Kaltluftkanals K - dem des ersten Ausführungsbeispiels, so dass im Folgenden nur auf die Unterschiede näher eingegangen wird. In der Zeichnung sind gleiche oder gleichwirkende Elemente mit den gleichen Bezugszeichen versehen, wie bei dem ersten Ausführungsbeispiel. Die weiterleitenden Luftkanäle B, D, F sind entsprechend dem ersten Ausführungsbeispiel angeordnet. Ebenfalls ist wiederum die kaftluftkanalseitige Wand des Warmluftkanals W der Mitte des Fußraumkanals F direkt gegenüberliegend angeordnet.

Der Warmluftkanal W und der Kaltluftkanal K sind gemäß dem zweiten Ausführungsbeispiel voneinander durch einen Winkel von 36° getrennt (Eintrittstrennung 36°). Die Asymmetrie der zuführenden und weiterleitenden Luftkanäle beträgt gemäß dem zweiten Ausführungsbeispiel 18°.

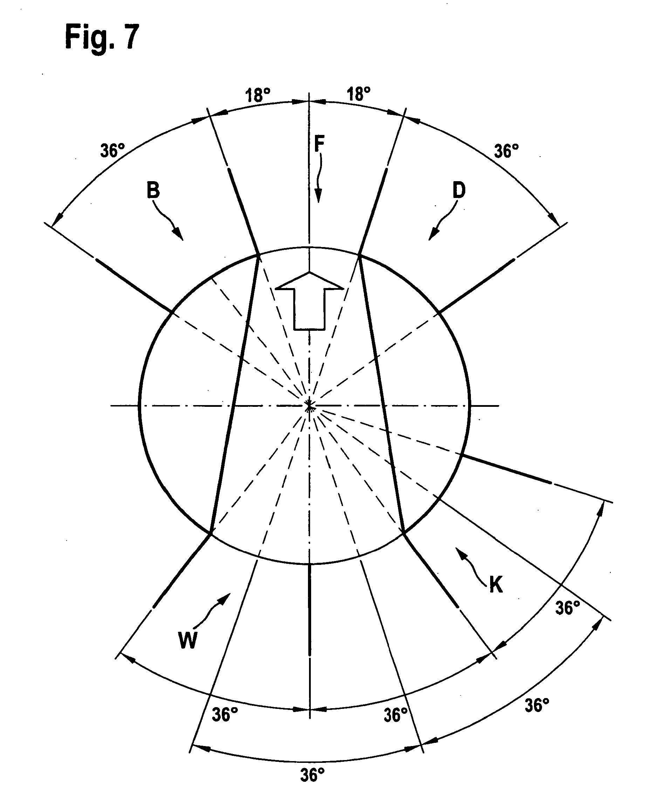

Diese Winkelanordnung hat den Vorteil, dass in der Stellung 100% Fußraumbelüftung, wie in Fig. 7 dargestellt, ausschließlich Luft vom Warmluftkanal W dem Fußkanal F zugeführt wird. Der Kaltluftkanal K ist geschlossen.

In der Stellung 100% Defrostbetrieb wird gemäß diesem Ausführungsbeispiel, wie auch gemäß dem ersten Ausführungsbeispiel, ausschließlich Warmluft vom Warmluftkanal W der Defrostdüse zugeführt, so dass auch in diesem Fall ein schnelles Entfrosten sichergestellt werden kann.

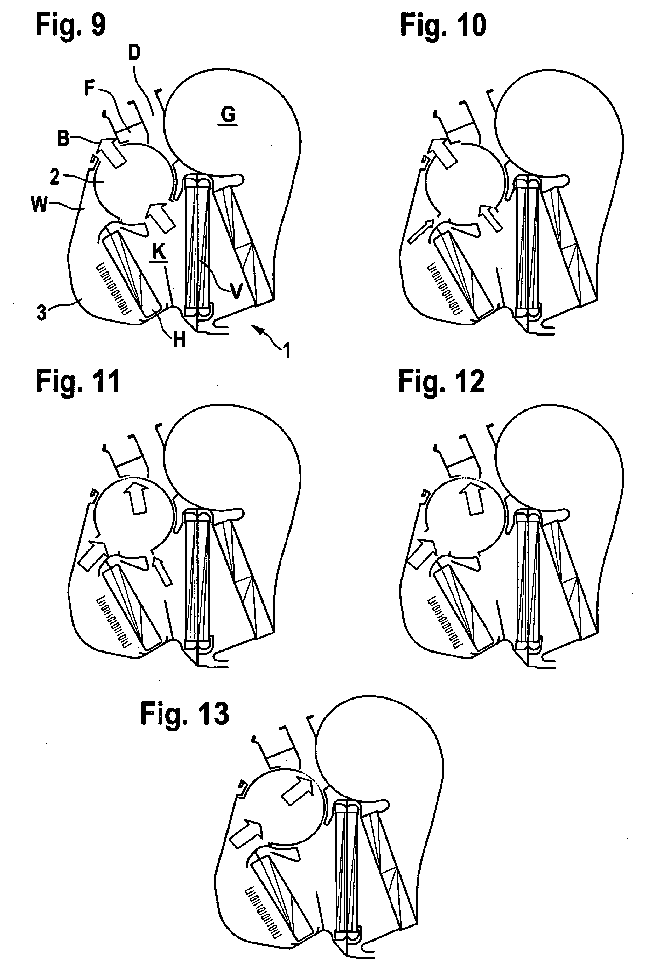

In den Figuren 9 bis 13 ist ein drittes Ausführungsbeispiel einer Kraftfahrzeug-Heizungs- und Klimaanlage 1 mit einer erfindungsgemäßen Luftmisch- und -verteilerklappe 2 dargestellt. Die Anlage 1 weist ein Gebläse G, einen Verdampfer V, einen Heizer H und besagte kombinierte Luftmisch- und -verteilerklappe 2 auf, die in mehrteilig ausgebildeten Luftführurigsgehäuse 3 angeordnet ist. Im Luftführungsgehäuse 3 sind wiederum fünf Luftkanäle ausgebildet, nämlich für die Zuführung der warmen, vom Heizer kommenden Luft (Warmluftkanal W), für die Zuführung der kalten, direkt vom Verdampfer über einen Bypass vorbei am Heizer geleiteten Luft (Kaltluftkanal K), für die Weiterleitung der gemischten, temperierten Luft zur Belüftung des Innenraums (Belüftungskanal B), für die Weiterleitung der gemischten, temperierten Luft zum Fußraum (Fußraumkanal F) und für die Weiterleitung der warmen Luft zum Entfrosten der Windschutzscheibe (Defrostkanal D).

Im Unterschied zu den vorigen Ausführungsbeispielen sind die Öffnungswinkel der einzelnen Luftkanäle unterschiedlich Vorliegend weist in der dargestellten Schnittebene der Warmluftkanal W einen Öffnungswinkel von ca. 85°, der Kaltluftkanal K einen Öffnungswinkel von ca. 50°, der Belüftungskanal B einen Öffnungswinkel von 35°, der Fußraumkanal F einen Öffnungswinkel von ca. 25° und der Defrostkanal D einen Öffnungswinkel von ca. 48° auf. Der Warm- und Kaltluftkanal sind um einen Winkel von ca. 45° voneinander beabstandet.

Ferner weist die Klappe 2 im Bereich der Luftanströmseite nach außen ragende Anschläge auf, welche den Drehbereich der Klappe 2 in Zusammenwirkung mit Anschlägen am Luftführungsgehäuse auf den Seiten des Warm- und Kaltluftkanals begrenzen. Gemäß einer Variante entfallen diese Anschläge, so dass eine Drehwinkelbegrenzung vorgesehen ist. Die Dichtfunktion, welche auch durch die Anschläge übernommen wird, insbesondere um ein Überströmen von Kalt- oder Warmluft in den anderen zuführenden Kanalbereich zu verhindern, wird in diesem Fall beispielsweise durch elastische Dichtlippen am Außenumfang der Klappe erfüllt.

Figur 9 zeigt die Betriebsstellung "Belüftung 100% kalt", d.h. ausschließlich direkt vom Verdampfer V kommende Luft wird dem Belüftungskanal B zugeführt. Die Öffnung des Warmluftkanals W ist vollständig durch eine äußere Klappenfläche der Klappe 2 verschlossen. Wird die Klappe 2 gemäß den Darstellungen in der Zeichnung im Uhrzeigersinn gedreht, so schließt sich langsam der Kaltluftkanal K und der Warmluftkanal W beginnt sich zu öffnen, so dass in einer Stellung, wie sie in Fig. 10 dargestellt ist, eine temperierte Belüftung des Fahrzeuginnenraums erfolgt. Wird die Klappe 2 weiter gedreht, so schließt sich der Belüftungskanal B allmählich vollständig, während sich der Fußraumkanal F langsam öffnet, wobei sowohl kalte als auch warme Luft zum Fußraumkanal F gelangt (siehe Fig. 11). In der Stellung von Fig. 12 ist der Kaltluftkanal K vollständig geschlossen, so dass ausschließlich Warmluft zum Fußraumkanal F gelangt. Fig. 13 zeigt die andere Endstellung der Klappe 2 gemäß dem vorliegenden Ausführungsbeispiel, in welcher der Warmluftkanal W vollständig geöffnet ist und die gesamte warme Luft zum Entfrosten verwendet wird, also zum Defrostkanal D geleitet wird.

Obwohl vorstehend nicht näher beschrieben, können in der Klappe auch an den Stirnflächen Öffnungen sowie im entsprechenden Bereich des Luftführungsgehäuses Luftkanäle vorgesehen sein, so dass die Regelung weiterer Luftkanäle möglich ist, beispielsweise für Luftkanäle, die dem Fondbereich zugeordnet sind.

Im Unterschied zu den vorstehen beschriebenen Ausführungsbeispielen können die inneren Klappenflächen auch parallel oder in Strömungsrichtung auseinanderlaufend angeordnet sein. Die inneren Klappenflächen können auch durch die Innenmantelflächen der Zylinderbereiche gebildet sein, welche die Klappe bilden, so dass eine sehr kostengünstige und materialsparende Ausgestaltung der Klappe ermöglicht wird. Beliebige andere gekrümmte Verläufe der inneren Klappenflächen sind möglich. Natürlich sind auch Mischformen möglich, d.h. beispielsweise kann auch nur eine der Seiten gekrümmt, die andere eben ausgebildet sein.

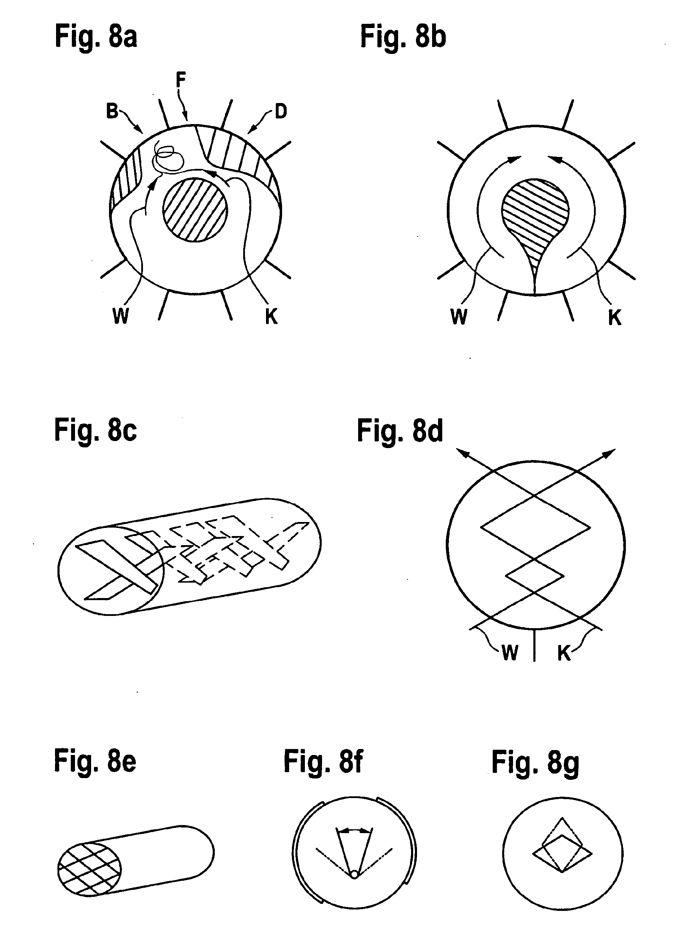

An den inneren Klappenflächen können sowohl gemäß dem ersten als auch gemäß dem zweiten Ausführungsbeispiel Kanalstrukturen ausgebildet und/oder an den Klappenflächen und/oder im Innenraum der Klappe Leitteile oder Verdrängungskörper (starr, flexibel oder verschwenkbar) angeordnet sein, wie in den Figuren 8a bis 8g skizziert, welche den Verlauf des Luftstroms durch die Klappe verändern. Als Verdrängungskörper kommen beispielsweise kreisförmige Körper (siehe Fig. 8a), die mittig oder außermittig angeordnet sind, tropfenförmige Strömungskörper (siehe Fig. 8b), schräg angeordnete Leitschaufeln oder sonstige Turbulenzerzeuger, beispielsweise gekreuzt angeordnete Bleche entlang der Mittellängsachse (siehe Fig. 8c), Strukturen mit mehrfacher, sich kreuzender Umlenkung (siehe Fig. 8d) in Frage. Beispielsweise durch Turbulenzerzeuger kann eine bessere Vermischung der Kalt- und Warmluft dadurch bewirkt werden. Die Verdrängungskörper können starr sein. Alternativ können die Verdrängungskörper flexibel sein, wobei sie beispielsweise elastische Wände aufweisen, die sich unter Innendruck verformen (siehe Fig. 8g), über mechanische Elemente oder temperaturabhängig verformt werden (Dehnstoffelement, Bimetall, Memorymetall). Im Innenraum kann ferner eine Schaumstruktur (offenzellig oder Gitterstruktur (siehe Fig. 8e)), um die Vermischung zu optimieren.

Die Leitteile oder Verdrängungskörper können auch beweglich angeordnet sein, beispielsweise durch Nocken oder Kurvenbahnen gesteuert oder separat angetrieben werden. Es sind beliebige Bewegungen möglich, beispielsweise Schwenkbewegungen, lineare Verschiebungen oder beliebige Kurvenbahnen. Die Bewegungen können auch in axialer Richtung oder mit axialem Anteil vorgesehen sein. Ebenfalls können Klappen im Innenraum der Klappe angeordnet sein, wie in Fig. 8f dargestellt. Hierbei können auch zwei Klappenflächen V-förmig angeordnet sein, welche beispielsweise starr um eine gemeinsame Schwenkachse verschwenkbar sind, oder welche sich in Abhängigkeit der Strömungsgeschwindigkeit und/oder des Anströmwinkels der Luft in ihrer Winkelstellung zueinander ändern.

Ebenfalls kann, beispielsweise durch Leitschaufeln oder schaufelförmige Einbauten, wie in Fig. 8c dargestellt, auch eine gezielte, sich kreuzende Strömung erzielt werden, so dass beispielsweise in einer Stellung 50% Belüftung und 50% Fußraum vermehrt warme Luft zum Fußraum und vermehrt kalte Luft zur Belüftung geführt wird, so dass auch eine Temperaturschichtung, d.h. im Gesichtsbereich der Insassen kühlere Luft als im Fußraum, möglich wird.

Die Einbauten können sowohl fest in der Klappe, d.h. sie drehen sich entsprechend der Drehung der Klappe mit, als auch fest im Luftführungsgehäuse angeordnet sein, d.h. sie bleiben stets in der gleichen Stellung, während sich die Klappe um die Einbauten dreht. Ebenfalls sind.

Getriebeübersetzungen für unterschiedliche Drehbewegungen von Klappe und Einbauten möglich.

## Patentansprüche

1. Heizungs- und/oder Klimaanlage, insbesondere für ein Kraftfahrzeug, die von dem Fahrzeuginnenraum zuzuführender Luft zur Temperierung derselben durchströmbar ist, mit einer kombinierten Luftmisch- und Verteilerklappe (2), die zumindest teilweise zylinderförmig ausgebildet ist, um eine Drehachse (5) verdrehbar ist, und zur Regelung der Lufttemperatur und der Luftverteilung der dem Fahrzeuginnenraum zuzuführenden Luft dient, bei der zwei zuführende Luftkanäle (W und K) und drei weiterführende Luftkanäle (B, D, F) vorgesehen sind, wobei die drei weiterführenden Luftkanäle ein Defrostkanal (D), ein Fußkanal (F) und ein Belüftungskanal (B) sind, und die kombinierte Luftmisch- und Verteilerklappe (2) Flächen aufweist, welche derart ausgebildet sind, dass sie in einer Stellung, in welcher der eine zuführende Luftkanal (W bzw. K) vollständig geöffnet ist, den jeweils anderen zuführenden Luftkanal (K bzw. W) vollständig verschließt, **dadurch gekennzeichnet, dass** der Fußkanal (F) zwischen dem Belüftungskanal (B) und dem Defrostkanal (D) angeordnet ist.

2. Anlage nach Anspruch 1, **dadurch gekennzeichnet, dass** die Flächen durch Bereiche der Mantelfläche der kombinierten Luftmisch- und Verteilerklappe (2) gebildet werden.

3. Anlage nach Anspruch 1 oder 2, **dadurch gekennzeichnet, dass** der Defrostkanal (D) benachbart neben dem Fußkanal (F) vorgesehen ist.

4. Anlage nach einem der vorhergehenden Ansprüche, **dadurch gekennzeichnet, dass** der Defrostkanal (D) gegenüberliegend einem Warmluftkanal (W) angeordnet ist.

5. Anlage nach einem der vorhergehenden Ansprüche, **dadurch gekennzeichnet, dass** der Belüftungskanal (B) gegenüberliegend einem Kaltluftkanal (K) angeordnet ist.

6. Anlage nach einem der vorhergehenden Ansprüche, **dadurch gekennzeichnet, dass** der Öffnungswinkel für alle drei weiterführenden Luftkanäle (B, D, F) jeweils gleich groß ist.

7. Anlage nach einem der vorhergehenden Ansprüche, **dadurch gekennzeichnet, dass** der Öffnungswinkel aller drei weiterführenden Luftkanäle (B, D, F) in einem Bereich von jeweils 30 bis 60° liegt.

8. Anlage nach einem der vorhergehenden Ansprüche, **dadurch gekennzeichnet, dass** eine Eintrittstrennung der beiden zuführenden Luftkanäle (W, K) von 0 bis 45°, insbesondere von 18 bis 36°, vorgesehen ist.

9. Anlage nach einem der vorhergehenden Ansprüche, **dadurch gekennzeichnet, dass** eine Asymmetrie der Mittelebene beider zuführender Luftkanäle (W, K) bezüglich der Mittelebene des mittleren der weiterführenden Luftkanäle (F) von 0 bis 30°, insbesondere von 9 bis 18°, vorgesehen ist.

10. Anlage nach einem der vorhergehenden Ansprüche, **dadurch gekennzeichnet, dass** die Luftmisch- und Verteilerklappe (2) zwei innere Klappenflächen (4) aufweist, die einander gegenüberliegend angeordnet sind und einen Luftkanal bilden, wobei die Klappenflächen (4) in Luftströmungsrichtung gesehen aufeinander zulaufen.

11. Anlage nach einem der vorhergehenden Ansprüche, **dadurch gekennzeichnet, dass** mindestens eine Stellung der Luftmisch- und Verteilerklappe (2) vorgesehen ist, in welcher die zuführenden Luftkanäle (W, K) von den weiterführenden Luftkanälen (B, D, F) durch mindestens eine durchgehende Klappenfläche der Luftmisch- und Verteilerklappe (2) getrennt sind.

12. Anlage nach einem der vorhergehenden Ansprüche, **dadurch gekennzeichnet, dass** in der kombinierten Luftmisch- und Verteilerklappe (2) Leitteile und/oder Kanalstrukturen zur Lenkung eines Luftstroms ausgebildet sind.

## Claims

1. Heating and/or air conditioning unit, especially for a motor vehicle, which can be flown through by air to be supplied to the interior of the vehicle for tempering it, with a combined air mixing and distributing flap (2), which is formed cylindrical at least in parts, which can be rotated around an axis (5) of rotation, and serves for the regulation of the air temperature and the air distribution of the air to be supplied to the interior of the vehicle, where two supplying air channels (W and K) and three forwarding air channels (B, D, F) are provided, wherein the three forwarding air channels are a defrosting channel (D), a base channel (F) and a ventilation channel (B), and the combined air mixing and distributing flap (2) comprises surfaces, which are formed in such a manner that it fully closes the respectively other supplying air channel (K or W) in a position, in which the one supplying air channel (W or K) is fully open, **characterised in that** the base channel (F) is arranged between the ventilation channel (B) and the defrosting channel (D).

2. Unit according to claim 1, **characterised in that** the surfaces are formed by regions of the casing surface of the combined air mixing and distributing flap (2).

3. Unit according to claim 1 or 2, **characterised in that** the defrosting channel (D) is provided adjacent to the base channel (F).

4. Unit according to one of the preceding claims, **characterised in that** the defrosting channel (D) is arranged opposite a hot air channel (W),

5. Unit according to one of the preceding claims, **characterised in that** the ventilation channel (B) is arranged opposite a cold air channel (K).

6. Unit according to one of the preceding claims, **characterised in that** the opening angle for all three forwarding air channels (B, D, F) has respectively the same size.

7. Unit according to one of the preceding claims, **characterised in that** the opening angle of all forwarding air channels (B, D, F) is in a region of respectively 30 to 60°.

8. Unit according to one of the preceding claims, **characterised in that** an entry separation of the two supplying channels (W, K) from 0 to 45°, especially from 18 to 36° is provided.

9. Unit according to one of the preceding claims, **characterised in that** an asymmetry of the centre plane of both supplying air channels (W, K) is provided with regard to the centre plane of the central one of the forwarding air channels (F) from 0 to 30°, especially from 9 to 18°.

10. Unit according to one of the preceding claims, **characterised in that** the air mixing and distributing flap (2) comprises two inner flap surfaces (4), which are arranged opposite to one another and which form an air channel, wherein the flap surfaces (4) converge seen in the air flow direction.

11. Unit according to one of the preceding claims, **characterised in that** at least one position of the air mixing and distributing flap (2) is provided, in which the supplying air channels (W, K) are separated from the forwarding air channels (B, D, F) by at least one continuous flap surface of the air mixing and distributing flap (2).

12. Unit according to one of the preceding claims, **characterised in that** conduction parts and/or channel structures are formed in the combined air mixing and distributing flap (2) for guiding an air flow.

## Revendications

1. Système de chauffage et / ou de climatisation, en particulier pour un véhicule automobile, qui peut être traversé par de l'air à fournir à l'habitacle du véhicule et servant à tempérer cet air d'alimentation, comprenant un volet combiné (2) mélangeur et répartiteur d'air qui est configuré au moins partiellement en forme de cylindre, est rotatif autour d'un axe de rotation (5), et sert à la régulation de la température de l'air et à la répartition de l'air à fournir à l'habitacle du véhicule, système dans lequel il est prévu deux conduits d'alimentation d'air (W et K) et trois conduits d'air se prolongeant (B, D, F), où les trois conduits d'air se prolongeant sont un conduit de dégivrage (D), un conduit d'air (F) pour les pieds et un conduit de ventilation (B), et le volet combiné (2) mélangeur et répartiteur d'air présente des surfaces qui sont configurées de manière telle, que dans une position dans laquelle l'un des conduits d'alimentation d'air (W ou K) est complètement ouvert, elles ferment complètement, à chaque fois, l'autre conduit d'alimentation d'air (K ou W),
**caractérisé en ce que** le conduit d'air (F) pour les pieds est disposé entre le conduit de ventilation (B) et le conduit de dégivrage (D).

2. Système selon la revendication 1, **caractérisé en ce que** les surfaces sont formées par des zones de la surface latérale du volet combiné (2) mélangeur et répartiteur d'air.

3. Système selon la revendication 1 ou 2, **caractérisé en ce que** le conduit de dégivrage (D) est prévu à proximité du conduit d'air (F) pour les pieds.

4. Système selon l'une quelconque des revendications précédentes, **caractérisé en ce que** le conduit de dégivrage (D) est disposé en faisant face à un conduit d'air chaud (W).

5. Système selon l'une quelconque des revendications précédentes, **caractérisé en ce que** le conduit de ventilation (B) est disposé en faisant face à un conduit d'air froid (K).

6. Système selon l'une quelconque des revendications précédentes, **caractérisé en ce que** l'angle d'ouverture est à chaque fois de la même grandeur pour la totalité des trois conduits d'air se prolongeant (B, D, F).

7. Système selon l'une quelconque des revendications précédentes, **caractérisé en ce que** l'angle d'ouverture de la totalité des trois conduits d'air (B, D, F) se prolongeant se situe dans une plage comprise à chaque fois entre 30° et 60°.

8. Système selon l'une quelconque des revendications précédentes, **caractérisé en ce qu'**il est prévu une séparation d'entrée des deux conduits d'alimentation d'air (W, K) comprise entre 0° et 45°, en particulier entre 18° et 36°.

9. Système selon l'une quelconque des revendications précédentes, **caractérisé en ce qu'**il est prévu une asymétrie du plan médian des deux conduits d'alimentation d'air (W, K), de 0° à 30°, en particulier de 9° à 18°, par rapport au plan médian de celui des conduits d'air se prolongeant (F), placé au milieu.

10. Système selon l'une quelconque des revendications précédentes, **caractérisé en ce que** le volet mélangeur et répartiteur d'air (2) présente deux surfaces de volet intérieures (4) qui sont disposées en se faisant face l'une l'autre et forment un conduit d'air, où les surfaces de volet (4), vues dans la direction d'écoulement de l'air, convergent l'une vers l'autre.

11. Système selon l'une quelconque des revendications précédentes, **caractérisé en ce qu'**il est prévu au moins une position du volet mélangeur et répartiteur d'air (2) dans laquelle les conduits d'alimentation d'air (W, K) sont séparés des conduits d'air se prolongeant (B, D, F), par au moins une surface de volet continue du volet mélangeur et répartiteur d'air (2).

12. Système selon l'une quelconque des revendications précédentes, **caractérisé en ce que** des parties déflectrices et / ou des structures de conduit servant à diriger un flux d'air sont configurées dans le volet combiné (2) mélangeur et répartiteur d'air.
